# EUROPEAN PATENT SPECIFICATION

(11) **EP 4 375 045 B1**
(45) Date of publication and mention of the grant of the patent: **09.12.2026**
(21) Application number: 22845955.8
(22) Date of filing: 20.07.2022
(51) Int. Cl.: B29C 49/42, B29C 45/16, B29C 45/26, B29C 49/06, B29C 49/22, B29C 49/02, B29L 31/00

(54) **RESIN CONTAINER PRODUCTION DEVICE AND METHOD FOR PRODUCING RESIN CONTAINER**
HARZBEHÄLTERHERSTELLUNGSVORRICHTUNG UND VERFAHREN ZUR HERSTELLUNG EINES HARZBEHÄLTERS
DISPOSITIF DE PRODUCTION DE RÉCIPIENT EN RÉSINE ET PROCÉDÉ DE PRODUCTION DE RÉCIPIENT EN RÉSINE

(30) Priority: 21.07.2021 JP 2021120798
(43) Date of publication of application: 29.05.2024
(73) Proprietor: Nissei ASB Machine Co., Ltd., Komoro-shi, Nagano 384-8585 (JP)
(72) Inventor: YAMAGUCHI, Masaki, Komoro-shi, Nagano 384-8585 (JP)
(74) Representative: Mewburn Ellis LLP
(86) International application number: PCT/JP2022/028230
(87) International publication number: WO 2023/003022

(56) References cited:
- WO-A1-2020/251035
- WO-A1-2020/251035
- WO-A1-97/43104
- JP-A- 2015 077 795
- JP-A- 2015 098 172
- JP-A- H08 132 517
- US-B2- 8 777 606

## Description

### TECHNICAL FIELD

The present disclosure relates to a resin container production device and a method for producing a resin container.

### BACKGROUND ART

Patent Literature 1 discloses a method for producing a resin container from a preform having a two-layer structure including an inner layer made of an unused resin material and an outer layer made of a recycled material prepared by recycling a used resin material. US 8 777 606 B2 discloses an injection stretch blow molding device and a molded part heating device.

### CITATION LIST

### PATENT LITERATURE

Patent Literature 1: WO2020/251035A1

### SUMMARY OF INVENTION

### TECHNICAL PROBLEM

In recent years, there has been an increasing tendency to promote use of a recycled plastic material (recycled material). Since plastic container packaging has a large proportion of plastic production amount and a short life cycle until it becomes a waste material, it is expected to increase a utilization rate of recycled materials in the production thereof. On the other hand, the demand for container packaging is currently large, and even in the production of a container having a two-layer structure in which a recycled material is laminated on an unused resin material, it is expected to increase the production amount of the container per unit time.

Further, a container having a two-layer structure composed of different resin materials is mainly produced by an extrusion blow molding method. However, in general, the extrusion blow molding method tends to increase the amount of waste material (loss material), and requires post-processing such as removal of burrs and trimming. If a container having a two-layer structure can be produced with good productivity by an injection stretch blow molding method (hot parison blow molding method), these problems can be solved.

An object of the present disclosure is to provide a novel resin container production device and a novel method for producing a resin container capable of producing a container having a two-layer structure with a high production amount per time.

### SOLUTION TO PROBLEM

A resin container production device according to claim 1.

A method for producing a resin container according to one aspect of the present disclosure is a method using the production device described above.

### ADVANTAGEOUS EFFECTS OF INVENTION

According to the present disclosure, it is possible to provide the resin container production device and the method for producing a resin container capable of producing a container having a two-layer structure with a high production amount per time.

### BRIEF DESCRIPTION OF DRAWINGS

[FIG. 1] FIG. 1 is a schematic plan view showing a resin container production device.
[FIG. 2] FIG. 2 is a schematic side view showing the resin container production device.
[FIG. 3] FIG. 3 is a schematic view showing a mode in which an inner layer is injection molded in an injection molding part.
[FIG. 4] FIG. 4 is a schematic view showing a mode in which an outer layer is injection molded on an outer side of the inner layer in the injection molding part.
[FIG. 5] FIG. 5 is a plan view of a conveying part according to an embodiment.

### DESCRIPTION OF EMBODIMENTS

Hereinafter, an embodiment of the present disclosure will be described with reference to the drawings. The dimensions of each member shown in the drawings may be different from the actual dimensions of each member for convenience of description.

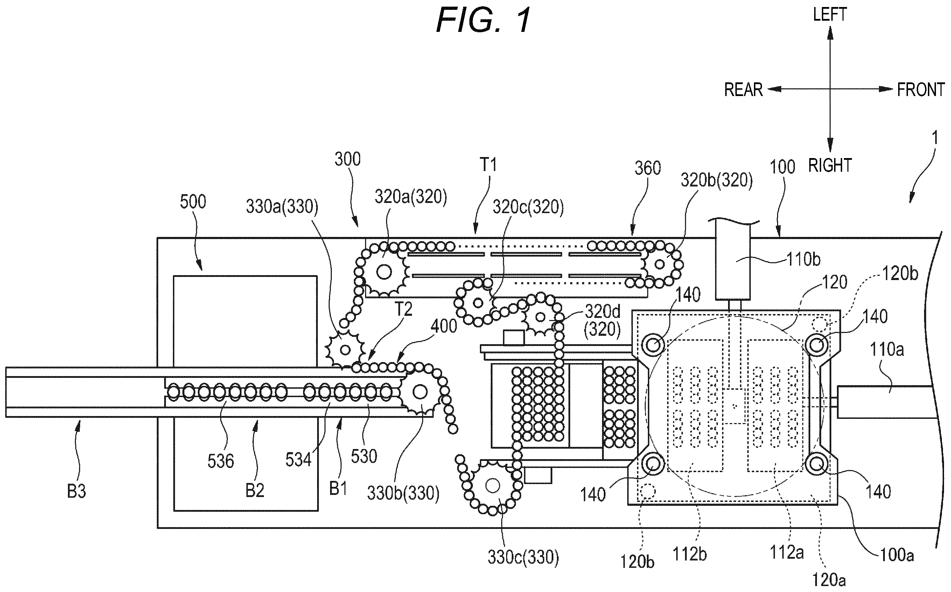

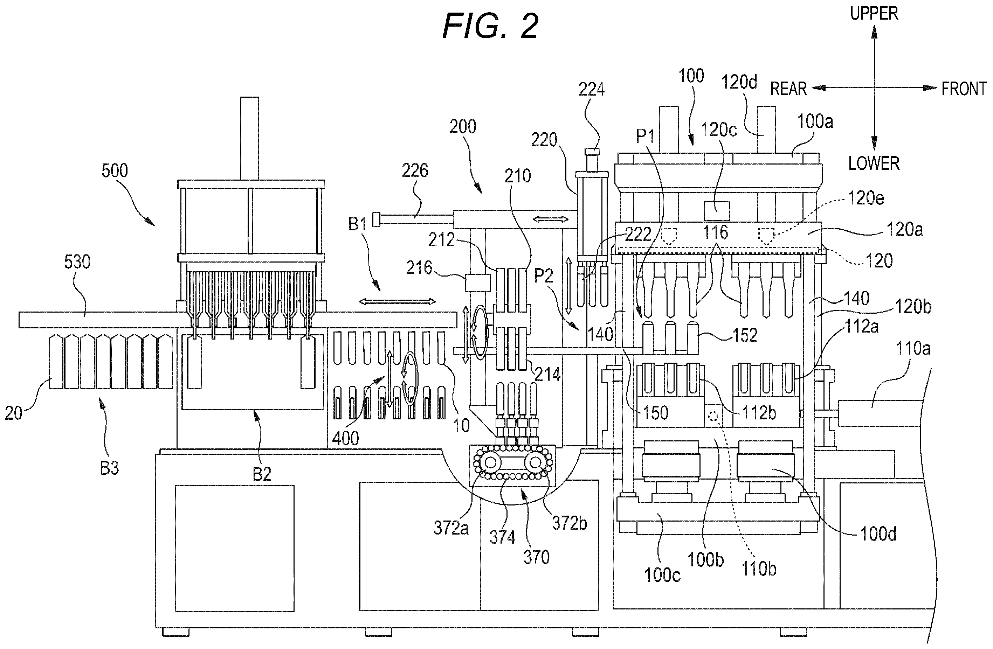

In the description of the present embodiment, for convenience of description, a "left-right direction", a "front-rear direction", and an "upper-lower direction" will be appropriately referred to. These directions are relative directions set for a production device shown in FIGS. 1 and 2. Here, the "upper-lower direction" is a direction including an "upper direction" and a "lower direction". The "front-rear direction" includes a "front direction" and a "rear direction". The "left-right direction" is a direction including a "left direction" and a "right direction".

FIG. 1 is a schematic plan view showing an entire state of a resin container production device 1 according to an embodiment. FIG. 2 is a schematic side view showing an entire state of the production device 1 according to the embodiment. The production device 1 includes an injection molding part 100 for molding a preform 10 made of resin and a blow molding part 500 for blow molding the preform 10 to mold a container 20. The production device 1 further includes a conveying part 300 that conveys the preform 10 molded in the injection molding part 100 to the blow molding part 500 (FIG. 1). In the production device 1, the injection molding part 100, the conveying part 300, and the blow molding part 500 are arranged in this order along a rear direction (an example of a first direction).

The production device 1 is a production device of a hot parison system (1.5 stage system) in which N (N is a natural number of 2 or more) preforms 10 that are simultaneously molded by injection molding are subjected to n (n is a natural number of 2 or more) times of blow molding operations such that M (M = N/n: M is a natural number) preforms 10 are blow molded in each time of blow molding operation. The container 20 produced by the production device 1 is a container having a two-layer structure including an inner layer made of a first resin material and an outer layer made of a second resin material. For example, the first resin material (synthetic resin) may be an unused resin material, and the second resin material may be a recycled material prepared by recycling a used resin material. The first resin material and the second resin material may be the same type of resin material or different types of resin materials. When the first resin material and the second resin material are the same type of resin material, examples of the first resin material and the second resin material include polyethylene terephthalate, polyethylene, and polypropylene. When the first resin material and the second resin material are the same type of resin material, both the first resin material and the second resin material may be recycled materials as long as a hygiene problem with respect to the human body does not occur (for example, the content is a liquid detergent). When the first resin material and the second resin material are different types of resin materials, it is desirable to select the first resin material and the second resin material such that the first resin material has a melting point higher than that of the second resin material.

The production device 1 includes a take-out device 150 that takes out the preform 10 from the injection molding part 100, a preform transfer device 220 that transfers the preform 10 from the take-out device 150, and a first inverting part (rear cooling unit) 200 that sends the preform 10 from the preform transfer device 220 to the conveying part 300 (FIG. 2). In addition, the production device 1 also includes a second inverting part 400 that sends the preform 10 from the conveying part 300 to the blow molding part 500 (FIG. 2).

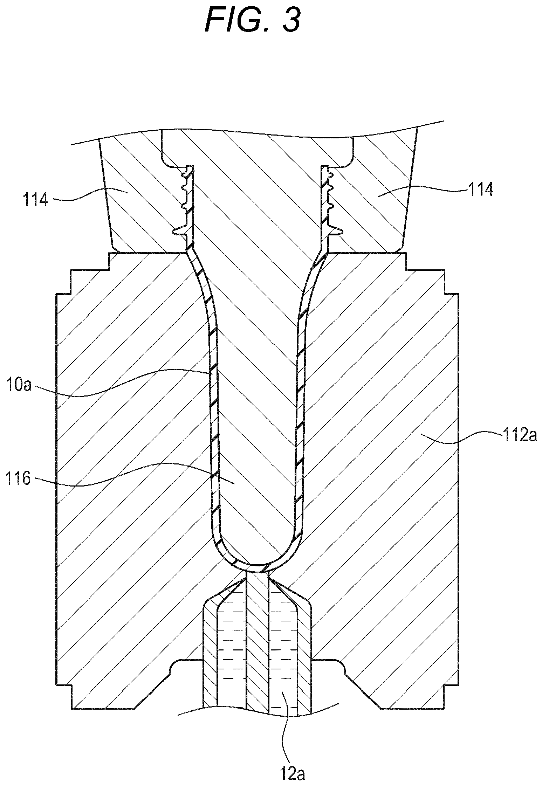

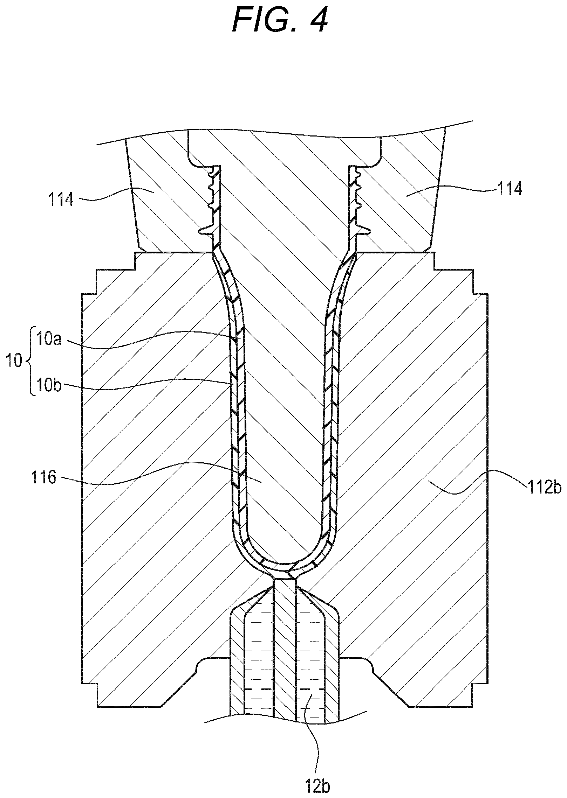

The injection molding part 100 performs injection molding to mold N (N is a natural number of 2 or more) preforms 10 in each time of injection molding. Specifically, the injection molding part 100 is configured to simultaneously injection mold M (M = N/n: M is a natural number) preforms 10 in each of n (n is an integer of 2 or more) rows parallel to the left-right direction, that is, a total of N preforms 10. The preform 10 produced by the injection molding part 100 has a two-layer structure including an inner layer made of an unused resin material and an outer layer made of a recycled material. FIG. 3 is a schematic view showing a mode in which an inner layer 10a is injection molded in an injection molding part 100. FIG. 4 is a schematic view showing a mode in which an outer layer 10b is injection molded on an outer side of the inner layer 10a in the injection molding part 100. Hereinafter, the injection molding part 100 will be described in detail with reference to FIGS. 1 to 4.

The injection molding part 100 includes a first injection molding part and a second injection molding part. The first injection molding part includes a first injection device 110a that injects a resin material of a first layer and a first cavity mold 112a connected to the first injection device 110a (FIG. 1). The second injection molding part includes a second injection device 110b that injects a resin material of a second layer and a second cavity mold 112b connected to the second injection device 110b (FIG. 1). In the embodiment, the first injection device 110a is configured to inject a first resin material (for example, unused resin material 12a), and the second injection device 110b is configured to inject a second resin material (for example, recycled material) 12b (FIGS. 3 and 4). In the present embodiment, the first layer corresponds to the inner layer 10a of the preform 10, and the second layer corresponds to the outer layer 10b of the preform 10.

In the embodiment, the first cavity mold 112a and the second cavity mold 112b are arranged in this order along the rear direction (an example of the first direction) (FIG. 1). In the embodiment, the first cavity mold 112a is disposed rearward of the first injection device 110a, and the second cavity mold 112b is disposed rightward (an example of a second direction intersecting the first direction) of the second injection device 110b (FIG. 1). The first cavity mold 112a and the second cavity mold 112b are fixed to a base plate 100b on a machine base, and are cooled by flowing cooling water at a predetermined temperature (for example, 10°C to 20°C).

The injection molding part 100 includes a rotation member (rotation plate) 120 provided on a movable plate 120a so as to be intermittently rotatable, an upper base 100a positioned above the rotation member, a pair of neck molds 114 and a pair of core molds 116 attached to the rotation member 120, four tie bars 140 fixed to the upper base 100a, a lifting drive part 120b for allowing the rotation member 120 to be driven so as to move up and down along the tie bars 140 via the movable plate 120a, a mold clamping mechanism 100d for clamping and driving the movable plate 120a or the rotation member 120, and a lower base 100c fixed to lower ends of the tie bars 140. The pair of (two) neck molds 114 and the pair of (two) core molds 116 are configured to be movable to positions where the first cavity mold 112a and the second cavity mold 112b are respectively provided by the rotation of the rotation member 120. The cooling water at a predetermined temperature (for example, 10°C to 20°C) flows through the pair of core molds 116 to be cooled. The rotation member 120 includes a rotation drive part 120c and is configured to be intermittently rotatable by 180°. The rotation member 120 also includes a pair of demolding drive parts 120e that demold the preform 10 from the pair of neck molds 114 and the pair of core molds 116.

The operation during molding of the preform 10 is, for example, as follows. First, the movable plate 120a (or the rotation member 120) is moved down along the tie bar 140 from an upper standby position by the lifting drive part 120b, and the pair of neck molds 114, the pair of core molds 116, and the pair of cavity molds (the first cavity mold 112a and the second cavity mold 112b) are closed. At this time, the movable plate 120a (or the rotation member 120) stops at a mold clamping position lower than the standby position, and a pressure receiving member 120d provided on an upper surface of the movable plate 120a is disposed lower than a lower surface of the upper base 100a through a through hole (not shown) of the upper base 100a. Subsequently, a shutter member (not shown) provided on the lower surface of the upper base 100a is closed, the mold clamping mechanism 100d is driven, and an upper end of the pressure receiving member 120d is brought into contact with the shutter member (not shown) to perform a mold clamping operation. Thereafter, the molten first resin material is injected from the first injection device 110a into the first cavity mold 112a. After first injection molding is completed, the mold clamping mechanism 100d is depressurized, the shutter member (not shown) is opened, the movable plate 120a (or the rotation member 120) is moved up and returned to the standby position, and the rotation member 120 is rotated by 180° by the rotation drive part 120c. At this time, the neck molds 114 and the core molds 116 holding the first layer move from a position of the first injection molding part to a position of the second injection molding part. At the same time, another set of the neck molds 114 and the core molds 116 moves from the position of the second injection molding part to the position of the first injection molding part. Thereafter, the movable plate 120a (or the rotation member 120) is moved down and the mold clamping operation is performed in the same manner as described above, and the molten second resin material is injected from the second injection device 110b into the second cavity mold 112b (at this time, the first injection molding is also performed simultaneously). After the second injection molding is completed, the movable plate 120a (or the rotation member 120) is moved up and the molds are opened in the same manner as described above, and the demolding drive part 120e of the movable plate 120a is driven to drop the preform 10 onto a holding member 152 to be described later. After the demolding, the rotation member 120 is rotated to move the neck molds 114 and the core molds 116 that have become empty from the position of the second injection molding part to the position of the first injection molding part.

As shown in FIG. 1, the number N of preforms that are simultaneously injection molded by the injection molding part 100 may be, for example, 24 at maximum (3 rows × 8). When a preform diameter is large, four preforms may be arranged in each row, and a total of N = 12 preforms may be formed in three rows. In addition, the number N of preforms that are simultaneously injection molded by the injection molding part 100 may be, for example, up to 36 (three rows × 12).

Here, the other configurations of the production device 1 will be described again. The take-out device 150 is configured to take out the N preforms 10 molded using the second cavity mold 112b of the injection molding part 100. The take-out device 150 is configured to be able to horizontally move N (for example, 3 rows × 8) holding members 152 (for example, pots) between a receiving position P1 below the core mold 116 and a delivery position P2 outside a space surrounded by the tie bars 140. The receiving position P1 may be a position where the second cavity mold 112b is provided.

The preform transfer device 220 transfers the N preforms 10 held by the three rows of holding members 152 of the take-out device 150 at the delivery position P2 shown in FIG. 2 to the first inverting part 200. The preform transfer device 220 includes a preform holding tool 222, a first transfer mechanism 224 that moves the preform holding tool 222 in the upper-lower direction, and a second transfer mechanism 226 that horizontally moves the preform holding tool 222 and the first transfer mechanism 224 in the front-rear direction. For example, an air cylinder or a servomotor is used as a drive source of the first transfer mechanism 224 and the second transfer mechanism 226.

The first inverting part 200 is a part that post-cools (additionally cools) the preform 10, and is configured to invert the preform 10 in an upright state molded by the injection molding part 100 to an inverted state in which a neck portion faces downward, and deliver the preform 10 to the conveying part 300. The first inverting part 200 includes a first inverting member 210. The first inverting member 210 includes N first inverting pots 212 and N second inverting pots 214 provided to face the first inverting pots 212. The first inverting pot 212 and the second inverting pot 214 (the first inverting member 210) are configured to be able to be intermittently inverted by 180° around an axis. The first inverting member 210 is configured to be movable up down by a ball screw or the like driven by a drive source 216 (for example, a servomotor). The first inverting pot 212 and the second inverting pot 214 are configured to cool the preforms 10 accommodated therein.

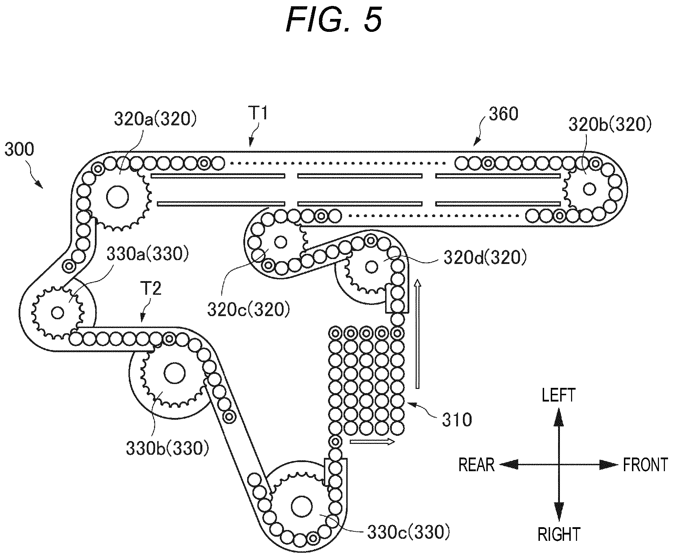

The conveying part 300 performs n times of conveyance for the N preforms 10 that are injection molded in the injection molding part 100 to the blow molding part 500 such that M preforms are conveyed in each time of conveyance. Specifically, the conveying part 300 is configured to convey the preform 10, which is conveyed from the injection molding part 100 to the conveying part 300 via the first inverting part 200, to the blow molding part 500. FIG. 5 is a plan view showing a mode of the conveying part 300. The conveying part 300 includes a plurality of first conveying members 310 configured to able to support the preforms 10. The M first conveying members 310 are connected by a connecting member to form a set of first conveying members 310. The connecting member of the set of first conveying members 310 is configured to be driven by a first conveyance drive part 320 and a second conveyance drive part 330 to be described later. In FIG. 5, a leading first conveying member 310 (or the preform 10) among the set of first conveying members 310 is marked with a double circle in order to distinguish it from the other seven first conveying members 310. Each first conveying member 310 is configured to be rotatable around an axis. The first conveying members 310 may not be connected. In this case, a member that meshes with a member that is continuously driven and intermittently driven, such as a sprocket, is provided in each first conveying member 310. The conveying part 300 is configured to be able to convey or hold the preforms 10 of injection molding batches over a plurality of times (for example, the preforms 10 molded by five times of injection molding, that is, 24 (36) × 5 preforms 10).

The conveying part 300 includes a loop-shaped conveying path including a guide rail or the like, and is configured to circulate and convey the first conveying member 310 along the conveying path. The conveying part 300 includes a plurality of sprockets 320a, 320b, 320c, and 320d as the first conveyance drive parts 320 that continuously drives the first conveying member 310, and sprockets 330a, 330b, and 330c as the second conveyance drive parts 330 that intermittently drives the first conveying member 310. In the first conveyance drive part 320, the sprocket 320d, the sprocket 320c, the sprocket 320b, and the sprocket 320a are arranged in this order from an upstream side. In the second conveyance drive part 330, the sprocket 330a, the sprocket 330b, and the sprocket 330c are arranged in this order from the upstream side.

A region where the first conveying member 310 is continuously driven by the first conveyance drive part 320 is a continuous conveying region T1. A region where the first conveying member 310 is intermittently driven by the second conveyance drive part 330 is an intermittent conveying region T2. The continuous conveying region T1 is located upstream of the intermittent conveying region T2 in the conveying part 300. The continuous conveying region T1 is provided with a heating unit 360 that heats the preform 10 to a temperature suitable for blow molding. The heating unit 360 is disposed in a path extending to the sprocket 320c, the sprocket 320b, and the sprocket 320a in the continuous conveying region T1. The heating unit 360 can be configured by disposing heaters (for example, a quartz heater) which are disposed in multiple stages in a height direction (upper-lower direction) and reflecting plates at intervals in the conveying direction, on both sides of the conveying part 300 of the continuous conveying region T1. In the heating unit 360, air may be blown out from a back surface of the heaters. The conveying part 300 can convey or hold the preforms 10 of a plurality of injection batches. Therefore, while the preform 10 is molded by the injection molding part 10, the preform 10 molded before the above preform 10 can be heated or temperature-controlled for a time longer than an injection molding time (for example, a time twice as long as the injection molding time when the first conveying members 310 for two injection batches can be disposed in the heating unit 360).

The conveying part 300 includes a parallel drive device 370 that drives a set of first conveying members 310 of a number equal to or greater than (n + 1) (for example, four (four) rows) in parallel at a position below the first inverting part 200 (FIG. 2). The parallel drive device 370 is formed by attaching both ends of a plurality of conveying rails to two chains 374 suspended between two sprockets 372a and 372b at end portions in the front-rear direction. When one of the sprockets 372a and 372b is rotated by one step, the conveying rail is transferred by one step. A leading row of a set of first conveying members 310 disposed in the parallel drive device 370 is configured to be pushed out in the left direction by a carry-out device (not shown) implemented by, for example, an air cylinder or the like. As a result, the set of first conveying members 310 on which the preforms 10 are mounted is sequentially meshed with the continuously driven sprocket 320d and continuously conveyed. The parallel drive device 370 transfers one set of first conveying members 310 in the left direction and then transfers another set of first conveying members 310 in the front direction by one step. The rearmost row of the parallel drive device 370 is configured to receive a set of first conveying members 310 on which the preforms 10 sent from the sprocket 330c are not placed.

The leading first conveying member 310 of a set of first conveying members 310 in a leading row is carried out by the carry-out device and is meshed with the most upstream sprocket 320d, and a continuous conveying force is applied from the sprocket 320d to the set of first conveying members 310. When a driving force is applied to the first conveying members 310 of the respective sets that mesh with the four continuously driven sprockets 320a, 320b, 320c, and 320d present in the continuous conveying region T1, the other set of first conveying members 310 that do not mesh with the sprocket that is continuously driven on the upstream side of the first conveying members 310 is pressed. Accordingly, the plurality of sets of first conveying members 310 are continuously conveyed along the conveying direction of the continuous conveying region T1.

The second inverting part 400 is disposed between the sprockets 330a and 330b in the intermittent conveying region T2 of the conveying part 300 (FIGS. 1 and 2). The second inverting part 400 includes a second inverting member (not shown) that inverts the preform 10 conveyed to the position of the second inverting part 400 by the conveying part 300 from the inverted state to the upright state and delivers the inverted preform 10 to the blow molding part 500. A set of first conveying members 310 is intermittently driven by the second conveyance drive part 330 so that the set of first conveying members 310 stops for a predetermined time at the position of the second inverting part 400.

The blow molding part 500 is configured to perform n (n is a natural number of 2 or more) times of blow molding for N preforms 10 such that M (M = N/n, where M is a natural number) containers 20 are molded in each time blow molding. The blow molding part 500 includes a blow cavity mold including split molds and can be opened and closed in the left-right direction to define a shape of a body portion of the container 20, a bottom mold that is movable up and down to define a bottom portion of the container 20, and a second conveying member 530 for conveying the preform 10 and the container 20 in the front-rear direction. The blow molding part 500 may also include a stretching rod, a blow core mold, a neck mold, and the like. When a stretching rod is provided, the container 20 is molded by performing biaxial stretching by blowing air and vertical axis driving of the stretching rod. The number of blow cavity molds necessary for processing the N preforms 10 is M, which is smaller than N. Therefore, the mold cost can be reduced, and further, a space of the production device 1 can be saved.

The second conveying member 530 is a chuck member that grips neck portions of the M preforms 10 or containers 20 to intermittently convey the preforms 10 or the containers 20. The second conveying member 530 has a holding arm that grips the neck portion of the preform 10 or the container 20. The second conveying member 530 integrally includes a carry-in part 534 and a carry-out part 536, and is driven to reciprocate in the front-rear direction. This reciprocating by driving is realized by, for example, a servomotor. By the reciprocating by driving, the carry-in part 534 reciprocates between a preform receiving position B1 and a blow molding position B2, and the carry-out part 536 reciprocates between the blow molding position B2 and a take-out position B3. The holding arm is integrally driven to open and close in the left-right direction by, for example, a driving force of an air cylinder. In addition, a pitch of the holding arms of the carry-in part 534 (a distance between the preforms) can be changed from a narrow pitch at the preform receiving position B1 to a wide pitch at the blow molding position B2 when moving from the preform receiving position B1 to the blow molding position B2.

Hereinafter, a method for producing a resin container using the production device 1 according to the present embodiment will be described. The producing method includes a step of injection molding the preform 10 in the injection molding part 100, and a step of blow molding the preform 10 conveyed in the blow molding part 500 into the container 20. The producing method also includes a step of conveying the preform 10 molded in the injection molding part 100 to the blow molding part 500, and a step of heating the preform 10 while conveying the preform 10 to the blow molding part 500.

Hereinafter, the step of injection molding the preform 10 will be described. First, in the injection molding part 100, the neck mold 114, the core mold 116, and the first cavity mold 112a are clamped, and the first resin material (for example, unused resin material) 12a is injected from the first injection device 110a into a cavity to be formed, thereby injection molding the inner layer 10a (FIG. 3). Then, the neck mold 114 and the core mold 116 holding the inner layer 10a are rotated by the rotation member 120 to be moved to a position where the second cavity mold 112b is provided. Then, the neck mold 114 and the core mold 116 holding the inner layer 10a and the second cavity mold 112b are clamped, and the second resin material (for example, a recycled material) 12b is injected from the second injection device 110b into the cavity to be formed, thereby injection molding the outer layer 10b outside the inner layer 10a (FIG. 4). Accordingly, N preforms 10 having a two-layer structure including the inner layer 10a and the outer layer 10b are molded.

The step of conveying the preform 10 molded in the injection molding part 100 to the blow molding part 500 includes a transfer step, a first forwarding step, a conveying step, and a second forwarding step. The transfer step is a step of taking out the preform 10 from the injection molding part 100 by the take-out device 150 and transferring the preform from the take-out device 150 to the first inverting part 200 by the preform transfer device 220 (FIG. 2). The first forwarding step is a step of inverting the preform 10 from the upright state to the inverted state by the first inverting part 200 and delivering the preform 10 to the conveying part 300 (FIG. 2).

The conveying step is a step of conveying the preform 10 in the conveying part 300 to the second inverting part 400 (FIG. 1). In the conveying step, a set of first conveying members 310 in the leading row of the parallel drive device 370 is conveyed to the left direction by the carry-out device, and the preform 10 is conveyed to the second inverting part 400 through the continuous conveying region T1 and the intermittent conveying region T2 (FIGS. 1 and 2).

The second forwarding step is a step of inverting the preform 10 from the inverted state to the upright state by the second inverting part 400 and delivering the preform 10 to the second conveying member 530 of the blow molding part 500 (FIG. 2). The first conveying member 310 on which the preform 10 is not placed is sent to the parallel drive device 370 by the sprocket 330c (FIGS. 1 and 2).

The step of heating the preform 10 is a step of heating the preform 10 during conveying by the heating unit 360 provided in the continuous conveying region T1 of the conveying part 300. During the molding, the preform 10 having a two-layer structure comes into contact with a low-temperature injection molding mold (the first cavity mold 112a, the second cavity mold 112b, and the core mold 116 corresponding to each cavity mold) twice, and is held by the first inverting part 200, and therefore the preform 10 is likely to be in a low-temperature state (residual heat of the preform 10 is likely to be released). In the production device 1 according to the present embodiment, the heating unit 360 can heat the preform 10 to supplement heat. Accordingly, even when the preform 10 having a two-layer structure molded by the injection molding part 100 is in a low-temperature state, the temperature of the preform 10 can be adjusted to a temperature suitable for blow molding.

The step of blow molding the preform 10 into the container 20 is a step of conveying the preform 10 from the preform receiving position B1 to the blow molding position B2 by the second conveying member 530, clamping the blow cavity mold and the bottom mold, blowing air into the preform 10, and molding the container 20 having a two-layer structure. Through these steps, the container 20 is produced.

According to the production device 1 having the above configuration, the containers 20 having a two-layer structure can be molded by n times of blow molding in the blow molding part 500 for the N preforms 10 having the two-layer structure molded in the injection molding part 100 such that M containers 20 are molded in each time of blow molding. During the injection molding step of the preform 10 which is a rate-determining step, the heating step, the blow molding step, and the like of the preform 10 molded before the injection molding step can be continuously processed in parallel. Accordingly, the container 20 having a two-layer structure can be produced with a higher production amount per time.

According to the production device 1 having the above configuration, the N preforms 10 having the two-layer structure molded using the second cavity mold 112b can be conveyed to the blow molding part 500 by the conveying part 300 by n times of conveyance such that M preforms 10 are conveyed in each time of conveyance. Accordingly, the containers 20 having a two-layer structure can be molded in the blow molding part 500 by n times of blow molding such that M containers 20 are molded in each time of blow molding, and the containers 20 having a two-layer structure can be produced with a high production amount per unit time.

According to the production device 1 having the above configuration, the first resin material (for example, unused resin material) 12a is injected from the first injection device 110a into the cavity formed by clamping the pair of neck molds 114 and the pair of core molds 116 and the first cavity mold 112a, so that the inner layer 10a can be injection molded (FIG. 3). Next, the second resin material (for example, the recycled material) 12b is injected from the second injection device 110b into a cavity formed by clamping the pair of neck molds 114 and the pair of core molds 116 holding the inner layer 10a and the second cavity mold 112b, so that the preform 10 having a two-layer structure including the outer layer 10b outside the inner layer 10a can be injection molded (FIG. 4). Since the pair of neck molds 114 and the pair of core molds 116 are configured to be movable to the positions where the first cavity mold 112a and the second cavity mold 112b are respectively provided by the rotation of the rotation member 120, the preform 10 having a two-layer structure can be repeatedly injection molded. Accordingly, the preform 10 having a two-layer structure can be injection molded with a high production amount per time, and further the container 20 can be produced with a high production amount per time. A weight ratio of the outer layer 10b (recycled material) to the preform 10 is set to 20% or more, preferably 30% or more, and more preferably 35% or more. When both the inner layer 10a and the outer layer 10b are recycled materials, the weight ratio of the recycled materials to the preform 10 having a two-layer structure is 100%. Even when both the inner layer 10a and the outer layer 10b of the preform 10 are molded from the recycled material of PET, the body portion of the preform produced by one injection molding can be thinned and sufficiently cooled by using the two-layer molding method described above. As a result, even in a case of a recycled material that is likely to undergo whitening due to crystallization, it is possible to prevent whitening in the body portion of the preform 10.

According to the production device 1 having the above configuration, since the injection molding part 100, the conveying part 300, and the blow molding part 500 are arranged in this order along the first direction (rear direction), and the first cavity mold 112a and the second cavity mold 112b are arranged in this order along the first direction (rear direction) in the injection molding part 100, after the preform 10 having a two-layer structure is formed by the second cavity mold 112b, the preform 10 is easily moved to the conveying part 300. Specifically, the preform 10 formed by the second cavity mold 112b can be moved to the conveying part 300 without being obstructed by a member or the like existing at a position where the first cavity mold 112a is provided. Accordingly, the preform can be efficiently moved, and the container 20 can be produced with a high production amount per unit time.

According to the production device 1 having the above configuration, since the first cavity mold 112a is disposed in the first direction (rear direction) with respect to the first injection device 110a, and the second cavity mold 112b is disposed in the second direction (right direction) intersecting the first direction (rear direction) with respect to the second injection device 110b, the preform 10 having a two-layer structure can be suitably injection molded without causing interference between the first injection device 110a and the second injection device 110b.

Note that the present disclosure is not limited to the above-described embodiment, and modification, improvement, and the like can be appropriately made. In addition, a material, a shape, a dimension, a numerical value, a form, a number, an arrangement location, and the like of each constitutional elements in the above-described embodiment are any and are not limited as long as the present disclosure can be achieved.

In the above embodiment, a mode of injection molding of a preform in which the first layer is the inner layer and the second layer is the outer layer has been described, but an outer layer may be injection molded to form a first layer, and an inner layer may be injection molded to form a second layer inside the outer layer.

In the above embodiment, in the injection molding part 100, a mode in which the first cavity mold 112a and the second cavity mold 112b are arranged in this order along the first direction (rear direction), but the first cavity mold 112a and the second cavity mold 112b may be arranged side by side at the same position in the first direction. In this case, the first cavity mold may be disposed in the first direction with respect to the first injection device, and the second cavity mold may be disposed in the first direction with respect to the second injection device.

In the above embodiment, the rotation member 120 to which the pair of neck molds 114 and the pair of core molds 116 are attached and which is intermittently rotatable by 180° has been described, but a modification in which three sets of a neck mold and a core mold are attached may be used as a rotation member that is intermittently rotatable by 120°, for example.

### REFERENCE SIGNS LIST

1: production device
10: preform
10a: inner layer
10b: outer layer
20: container
100: injection molding part
110a: first injection device
110b: second injection device
112a: first cavity mold
112b: second cavity mold
114: neck mold
116: core mold
120: rotation member
300: conveying part
360: heating unit
500: blow molding part

## Claims

1. A production device (1) for a resin container having a two-layer structure including an inner layer made of a first resin material and an outer layer made of a second resin material, the production device (1) comprising:
an injection molding part (100) configured to perform injection molding to mold N preforms (10) in each time of injection molding, the preform (10) having a two-layer structure including an inner layer (10a) made of the first resin material and an outer layer (10b) made of the second resin material, wherein N is a natural number of 2 or more; and
a blow molding part (500) configured to perform n times of blow molding for the N preforms (10) such that M resin containers are molded in each time of blow molding, wherein n is a natural number of 2 or more, and M=N/n, where M is a natural number.

2. The production device (1) according to claim 1,
wherein the injection molding part (100) comprises:
a first cavity mold (112a) connected to a first injection device (110a) configured to inject a resin material of a first layer; and
a second cavity mold (112b) connected to a second injection device (110b) configured to inject a resin material of a second layer,
wherein the production device (1) further comprises a conveying part (300) configured to convey the preform (10) molded using the second cavity mold (112b) to the blow molding part (500), and
wherein the conveying part (300) performs n times of conveyance for the N preforms (10) molded in the injection molding part (100) to the blow molding part (500) such that M preforms (10) are conveyed in each time of conveyance.

3. The production device (1) according to claim 2,
wherein the injection molding part (100) further comprises:
a rotation member (120) configured to be intermittently rotatable, and
a pair of neck molds (114) and a pair of core molds (116) attached to the rotation member (120), and
wherein the pair of neck molds (114) and the pair of core molds (116) are configured to be movable by rotation of the rotation member (120) to positions where the first cavity mold (112a) and the second cavity mold (112b) are respectively provided.

4. The production device (1) according to claim 3,
wherein the injection molding part (100), the conveying part (300), and the blow molding part (500) are arranged in this order along a first direction, and
wherein the first cavity mold (112a) and the second cavity mold (112b) are arranged in this order along the first direction in the injection molding part (100).

5. The production device (1) according to claim 1,
wherein the injection molding part (100) comprises:
a first cavity mold (112a) connected to a first injection device (110a) configured to inject the first resin material;
a second cavity mold (112b) connected to a second injection device (110b) configured to inject the second resin material,
a rotation member (120) configured to be intermittently rotatable, and
a pair of neck molds (114) and a pair of core molds (116) attached to the rotation member (120), and
wherein the pair of neck molds (114) and the pair of core molds (116) are configured to be movable by rotation of the rotation member (120) to positions where the first cavity mold (112a) and the second cavity mold (112b) are respectively provided.

6. The production device (1) according to claim 5, further comprising:
a conveying part (300) configured to convey the preform (10) molded in the injection molding part (100) to the blow molding part (500),
wherein the injection molding part (100), the conveying part (300), and the blow molding part (500) are arranged in this order along a first direction, and
wherein the first cavity mold (112a) and the second cavity mold (112b) are arranged in this order along the first direction in the injection molding part (100).

7. The production device (1) according to any one of claims 1 to 6,
wherein the first resin material is an unused resin material, and the second resin material is a recycled material prepared by recycling a used resin material.

8. A method for producing a resin container using the production device (1) according to any one of claims 1 to 7.

## Patentansprüche

1. Herstellungsvorrichtung (1) für einen Harzbehälter mit einer zweischichtigen Struktur, die eine innere Schicht aus einem ersten Harzmaterial und eine äußere Schicht aus einem zweiten Harzmaterial umfasst, wobei die Herstellungsvorrichtung (1) Folgendes umfasst:
ein Spritzgießteil (100), das dazu ausgelegt ist, Spritzgießen auszuführen, um N Vorformlinge (10) bei jedem Spritzgießdurchgang zu formen, wobei der Vorformling (10) eine zweischichtige Struktur aufweist, die eine innere Schicht (10a) aus dem ersten Harzmaterial und eine äußere Schicht (10b) aus dem zweiten Harzmaterial umfasst, wobei N eine natürliche Zahl von 2 oder mehr ist; und
ein Blasformteil (500), das dazu ausgelegt ist, n Blasformdurchgänge für die N Vorformlinge (10) auszuführen, sodass bei jedem Blasformdurchgang M Harzbehälter geformt werden, wobei n eine natürliche Zahl von 2 oder mehr ist und M = N/n ist, worin M eine natürliche Zahl ist.

2. Herstellungsvorrichtung (1) nach Anspruch 1,
wobei das Spritzgießteil (100) Folgendes umfasst:
eine erste Hohlraumform (112a), die mit einer ersten Spritzgießvorrichtung (110a) verbunden ist, die dazu ausgelegt ist, Harzmaterial einer ersten Schicht einzuspritzen; und
eine zweite Hohlraumform (112b), die mit einer zweiten Spritzgießvorrichtung (110b) verbunden ist, die dazu ausgelegt ist, Harzmaterial einer zweiten Schicht einzuspritzen,
wobei die Herstellungsvorrichtung (1) weiters ein Förderteil (300) umfasst, das dazu ausgelegt ist, den Vorformling (10), der unter Verwendung der zweiten Hohlraumform (112b) geformt wird, zum Blasformteil (500) zu transportieren, und
wobei das Förderteil (300) n Förderdurchgänge für die N Vorformlinge (10), die im Spritzgießteil (100) geformt werden, zum Blasformteil (500) durchführt, sodass bei jedem Förderdurchgang M Vorformlinge (10) transportiert werden.

3. Herstellungsvorrichtung (1) nach Anspruch 2,
wobei das Spritzgießteil (100) weiters Folgendes umfasst:
ein Rotationselement (120), das dazu ausgelegt ist, intermittierend rotierbar zu sein, und
ein Paar Halsformen (114) und ein paar Kernformen (116), die am Rotationselement (120) befestigt sind, und
wobei das Paar Halsformen (114) und das Paar Kernformen (116) dazu ausgelegt sind, durch eine Rotation des Rotationselements (120) in Stellungen bewegt zu werden, in denen die erste Hohlraumform (112a) und die zweite Hohlraumform (112b) jeweils bereitgestellt werden.

4. Herstellungsvorrichtung (1) nach Anspruch 3,
wobei das Spritzgießteil (100), das Förderteil (300) und das Blasformteil (500) in dieser Reihenfolge entlang einer ersten Richtung angeordnet sind und
wobei die erste Hohlraumform (112a) und die zweite Hohlraumform (112b) in dieser Reihenfolge entlang der ersten Richtung im Spritzgießteil (100) angeordnet sind.

5. Herstellungsvorrichtung (1) nach Anspruch 1,
wobei das Spritzgießteil (100) Folgendes umfasst:
eine erste Hohlraumform (112a), die mit einer ersten Spritzgießvorrichtung (110a) verbunden ist, die dazu ausgelegt ist, das erste Harzmaterial einzuspritzen;
eine zweite Hohlraumform (112b), die mit einer zweiten Spritzgießvorrichtung (110b) verbunden ist, die dazu ausgelegt ist, das zweite Harzmaterial einzuspritzen,
ein Rotationselement (120), das dazu ausgelegt ist, intermittierend rotierbar zu sein, und
ein Paar Halsformen (114) und ein Paar Kernformen (116), die am Rotationselement (120) befestigt sind, und
wobei das Paar Halsformen (114) und das Paar Kernformen (116) dazu ausgelegt sind, durch eine Rotation des Rotationselements (120) in Stellungen bewegt zu werden, in denen die erste Hohlraumform (112a) und die zweite Hohlraumform (112b) jeweils bereitgestellt werden.

6. Herstellungsvorrichtung (1) nach Anspruch 5, die weiters Folgendes umfasst:
ein Förderteil (300), das dazu ausgelegt ist, den Vorformling (10), der im Spritzgießteil (100) geformt wird, zum Blasformteil (500) zu transportieren,
wobei das Spritzgießteil (100), das Förderteil (300) und das Blasformteil (500) in dieser Reihenfolge entlang einer ersten Richtung angeordnet sind und
wobei die erste Hohlraumform (112a) und die zweite Hohlraumform (112b) in dieser Reihenfolge entlang der ersten Richtung im Spritzgießteil (100) angeordnet sind.

7. Herstellungsvorrichtung (1) nach einem der Ansprüche 1 bis 6,
wobei das erste Harzmaterial frisches Harzmaterial ist und das zweite Harzmaterial Recycling-Material ist, das durch Recycling eines gebrauchten Harzmaterials hergestellt wird.

8. Verfahren zur Herstellung eines Harzbehälters unter Verwendung einer Herstellungsvorrichtung (1) nach einem der Ansprüche 1 bis 7.

## Revendications

1. Dispositif de production (1) pour un récipient en résine présentant une structure à deux couches incluant une couche interne constituée d'un premier matériau de résine et d'une couche externe constituée d'un second matériau de résine, le dispositif de production (1) comprenant :
une partie de moulage par injection (100) configurée pour effectuer un moulage par injection afin de mouler N préformes (10)lors de chaque moulage par injection, la préforme (10) présentant une structure à deux couches incluant une couche interne (10a) constituée du premier matériau de résine et une couche externe (10b) constituée du second matériau de résine, dans lequel N est un entier naturel de 2 ou plus ; et
une partie de moulage par soufflage (500) configurée pour effectuer n fois un moulage par soufflage pour les N préformes (10) de telle sorte que M récipients en résine sont moulés lors de chaque moulage par soufflage, dans lequel n est un nombre entier naturel de 2 ou plus, et M=N/n, où M est un nombre entier naturel.

2. Dispositif de production (1) selon la revendication 1,
dans lequel la partie de moulage par injection (100) comprend :
un premier moule à cavité (112a) raccordé à un premier dispositif d'injection (110a) configuré pour injecter un matériau de résine d'une première couche ; et
un second moule à cavité (112b) raccordé à un second dispositif d'injection (110b) configuré pour injecter un matériau de résine d'une seconde couche,
dans lequel le dispositif de production (1) comprend en outre une partie de transport (300) configurée pour transporter la préforme (10) moulée en utilisant le second moule à cavité (112b) vers la partie de moulage par soufflage (500), et
dans lequel la partie de transport (300) effectue n fois un transport pour les N préformes (10) moulées dans la partie de moulage par injection (100) vers la partie de moulage par soufflage (500) de telle sorte que M préformes (10) sont transportées lors de chaque transport.

3. Dispositif de production (1) selon la revendication 2,
dans lequel la partie de moulage par injection (100) comprend en outre :
un élément de rotation (120) configuré pour être rotatif par intermittence, et
une paire de moules de col (114) et une paire de moules de noyau (116) fixés à l'élément de rotation (120), et
dans lequel la paire de moules de col (114) et la paire de moules de noyau (116) sont configurées pour être mobiles par rotation de l'élément de rotation (120) vers des positions où le premier moule à cavité (112a) et le second moule à cavité (112b) sont respectivement prévus.

4. Dispositif de production (1) selon la revendication 3,
dans lequel la partie de moulage par injection (100), la partie de transport (300) et la partie de moulage par soufflage (500) sont agencées dans cet ordre le long d'une première direction, et
dans lequel le premier moule à cavité (112a) et le second moule à cavité (112b) sont agencés dans cet ordre le long de la première direction dans la partie de moulage par injection (100).

5. Dispositif de production (1) selon la revendication 1,
dans lequel la partie de moulage par injection (100) comprend :
un premier moule à cavité (112a) raccordé à un premier dispositif d'injection (110a) configuré pour injecter le premier matériau de résine ;
un second moule à cavité (112b) raccordé à un second dispositif d'injection (110b) configuré pour injecter le second matériau de résine,
un élément de rotation (120) configuré pour être rotatif par intermittence, et
une paire de moules de col (114) et une paire de moules de noyau (116) fixés à l'élément de rotation (120), et
dans lequel la paire de moules de col (114) et la paire de moules de noyau (116) sont configurées pour être mobiles par rotation de l'élément de rotation (120) vers des positions où le premier moule à cavité (112a) et le second moule à cavité (112b) sont respectivement prévus.

6. Dispositif de production (1) selon la revendication 5, comprenant en outre :
une partie de transport (300) configurée pour transporter la préforme (10) moulée dans la partie de moulage par injection (100) vers la partie de moulage par soufflage (500),
dans lequel la partie de moulage par injection (100), la partie de transport (300) et la partie de moulage par soufflage (500) sont agencées dans cet ordre le long d'une première direction, et
dans lequel le premier moule à cavité (112a) et le second moule à cavité (112b) sont agencés dans cet ordre le long de la première direction dans la partie de moulage par injection (100).

7. Dispositif de production (1) selon l'une quelconque des revendications 1 à 6,
dans lequel le premier matériau de résine est un matériau de résine non utilisé, et le second matériau de résine est un matériau recyclé préparé par recyclage d'un matériau de résine utilisé.

8. Procédé de production d'un récipient en résine en utilisant le dispositif de production (1) selon l'une quelconque des revendications 1 à 7.
